# EUROPEAN PATENT APPLICATION

(11) **EP 2 966 589 A1**
(43) Date of publication of application: **13.01.2016**
(21) Application number: 14760551.3
(22) Date of filing: 03.03.2014
(51) Int. Cl.: G06K 7/00

(54) **COMMUNICATION TERMINAL PRODUCT SUPPORTING INTERACTIVE ASSOCIATION SYSTEM**

(30) Priority: 04.03.2013 CN 201320099685 U; 04.03.2013 CN 201320099660 U; 08.10.2013 CN 201320626542 U; 04.01.2014 CN 201420028355 U
(71) Applicant: Yau, Yim Wai, N.T., Hong Kong (CN)
(72) Inventor: Yau, Yim Wai, N.T., Hong Kong (CN)
(74) Representative: ProI European Patent Attorneys
(86) International application number: PCT/CN2014/072813
(87) International publication number: WO 2014/135049

(57) **Abstract**

The invention relates to an information association technology of a cross-media product, in particular to a communication terminal product supporting an interaction association system. The communication terminal product supports a mobile communication technology system and supports transmission and reception of a multimedia information signal of the interaction association system. The interaction association system comprises an electronic reading device and an electronic transmitter-receiver. The Interactive Interconnected Systems includes an electronic reading device and an electronic transmitter-receiver. The multimedia information signal is a combination of various media data. The associated data is an URI (Uniform Resource Identifier). The electronic transmitter-receiver includes an associated data reception circuit, an associated data transmission circuit and a central processing unit (with memory). The associated data reception circuit is attached with a short-distance signal transmission-reception circuit. The electronic transmitter-receiver is used to control the transceiver of the associated data from the decomposition multimedia information signal. It receives the associated data decomposed by the transmission circuit of the electronic reading device, and then transmits the associated data to external data storage via remote communication technology. This can obtain the associated digital resource in a quick and efficiency way.

## Description

### [Technical Field]

The invention relates to an information association technology of a cross-media product, in particular to a communication terminal product supporting an interaction association system for achieving barrier-free development of information.

### [Background Art]

With the rapid development of a broadband wireless access technology and a mobile terminal technology, people have an urgent hope to be able to obtain information and service from Internet conveniently at will in a mobile process whenever and wherever possible.

However, mobile Internet is not mobilized Internet, but is a generic term of activities of combination and practice of technologies, platforms, commercial modes and applications of the Internet, and mobile communication technologies.

Mobile terminals will be more networked and socialized in future. How will the boring fragmented time of the people be made full use of? Such boring fragmented time is isolated and short. Since a mobile phone and other intelligent terminals are closest to the people, they can be considered as a constituent part of the people.

As the mobile phone becomes a mobile carrier in an information network, the mobile phone is not just a tool for making a call and sending short messages any longer, but is a miniature computer which can achieve ultimate combination of communication and the Internet to enable people to enter the era of mobile informatization really.

The mobile informatization is to realize comprehensive application of an information system on a handheld terminal such as the mobile phone in a manner of fusion of communication technologies such as telecommunications, broadcast and the Internet to achieve the purpose of obtaining relevant information whenever and wherever possible at will at last.

Although the transmission capacity of a traditional media advertisement product is lower than that of electronic media obviously, electronic media are not an "ultimate media form which can replace any one of the traditional print paper media, traditional broadcast, traditional television, traditional Internet and the like" praised highly by some people.

How do matters stand?

The development of the electronic media still has serious defects and deficiencies. Due to the lack of relevant technical support for achieving cross-media information interaction association, so-called omnimedia is just to prepare the information content of the plane media into an electronic edition to be provided for a user to select.

With the development of a new generation broadcast technology based on DAB (Digital Audio Broadcasting), DVB (Digital Video Broadcasting), DMB (Digital Media Broadcasting) and the like, scientific and technical workers all over the world try hard to solve the relevant problems, for example Chinese invention patents 200310113194.8, 200610072903.6, 200580034624.4, 200620039633.4 and the like, which only effectively improve the transmission capacity of the information.

The smart phone shall log in the relevant electronic Internet of the cross-media product information to obtain richer relevant information epitaxially, the association technology is a non-spanning necessity, and the association technology and a transmission technology are two technical purposes of different concepts.

The existing association technology on the market is mainly a two-dimensional code pattern technical scheme. Although the two-dimensional code pattern technical scheme has become a mature product and industrial chain, there are many technical use condition limits in actual operation, as follows:
1. The smart phone can carry out shooting after downloading an appropriate application.
2. Definition of a two-dimensional code pattern.
3. Light during shooting of the two-dimensional code pattern.
4. Distance for shooting of the two-dimensional code pattern.
5. The two-dimensional code patterns are different in size (including 8mm*8mm, 10mm*110mm....100mm*100mm, etc.), and the attached two-dimensional code patterns influence the appearance attractiveness of an advertisement board.

If the two-dimensional code patterns are implanted into a screen frame and a webpage of a video product... during the actual operation, an electronic screen displays the two-dimensional code patterns for a very short time, and the user operation is difficult.

In addition, the two-dimensional code pattern technical scheme is powerless to achieve broadcast (an audio information technology) association with a multimedia information signal...

Therefore, a simpler and quicker interaction association technology with a high effect for randomly meeting the requirements anytime and anywhere is an urgent hope for the market.

The interaction association system provided by the invention is a technology for achieving barrier-free transmission of the cross-media product information.

### [Summary]

In order to achieve the above purposes, the invention provides a communication terminal product supporting an interaction association system.

The communication terminal product supports a mobile communication technology system and supports transmission and reception of a multimedia information signal of the interaction association system, wherein
the interaction association system comprises an electronic reading device and an electronic transmitter-receiver;
the multimedia information signal is a combination supporting various media data;
the association data is set URI (Uniform Resource Identifier);
the electronic reading device is provided with a combination data reception circuit, a combination data decomposition circuit and a transmission circuit; the combination data reception circuit is configured to receive the multimedia information signal; the combination data decomposition circuit is configured to decompose the multimedia information signal into the media information data and the association data; the decomposed association data is transmitted to the electronic transmitter-receiver via the transmission circuit;
the electronic transmitter-receiver is provided with an association data reception circuit, an association data transmission circuit and a central processing unit comprising a memory;
the association data reception circuit is equipped with a short-distance signal transmission-reception circuit; and
the electronic transmitter-receiver is mainly configured to control transmission and reception of the association data of the decomposed multimedia information signal, receive the association data decomposed by the transmission circuit of the electronic reading device, transmit the association data to an external information data storage center via a remote wireless technology, and quickly call out an associated electronic file.

The association data reception circuit, the association data transmission circuit and a central processing unit module (comprising the memory) of the electronic transmitter-receiver, as well as the combination data reception circuit, the combination data decomposition circuit, the transmission circuit and a CPU (Central Processing Unit) module of the electronic reading device are embedded into the communication terminal product with independent operation.

The electronic transmitter-receiver is provided with the association data reception circuit, the association data transmission circuit and the central processing unit module comprising the memory, which are embedded into the communication terminal product with the independent operation; and
the electronic reading device is provided with the combination data reception circuit, the combination data decomposition circuit, the transmission circuit, and the CPU module, which are embedded into the electronic terminal product supporting the interaction association system.

The transmission circuit of the electronic reading device is equipped with the short-distance signal transmission-reception circuit;
the combination data decomposition circuit of the electronic reading device is configured to decompose the multimedia information signal into the media information data that includes digital data, video data, audio data, program data, and the like;
the digital data after the decomposition of the media information data is transmitted to the related configuration for use after transmitted to a digital data system for processing;

The video data after decomposition of the media information data is transmitted to related configuration for use after transmitted to a video system for processing;

The audio data after the decomposition of the media information data is transmitted to the related configuration for use after transmitted to an audio system for processing; and
the program data after the decomposition of the media information data is transmitted to the related configuration for use after transmitted to a program system for processing; and
the decomposed association data is transmitted by the transmission circuit and the equipped short-distance signal transmission-reception circuit.
the electronic transmitter-receiver is configured to receive the association data decomposed by the transmission circuit of the electronic reading device, transmit the association data to an external information data storage center via a remote wireless technology, and quickly call out an associated electronic file.

The electronic transmitter-receiver is provided with an association operation key supporting the interaction association system.

The electronic transmitter-receiver is provided with a signal induction system and the association operation key supporting the interaction association system.

The electronic transmitter-receiver is provided with the association operation key, a signal induction device supporting the interaction association system, and an electronic display screen.

The multimedia information signal is transmitted by a signal transmission station and a signal transmission transfer device.

The association data received by the electronic transmitter-receiver is from various transmission approaches, and the electronic transmitter-receiver is connected with an electronic storage device of the multimedia information signal supporting the interaction association system for reception.

The invention provides a communication terminal product supporting an interaction association system, which realizes the interactionassociation of cross-media information products and achieves the goal of barrier-free information:
1. The communication terminal product may acquire the relevant association data from the multimedia information signal supporting the interaction association system, and the related association data is transmitted synchronously as a quick entry point of an electronic webpage to meet random technical requirements of the mobile informatization anytime and anywhere.
2. Due to the technical combination characteristic of the interaction association system, original functions of the product are not changed, and combined functions can support mutually to achieve an obvious technical effect, the barrier-free association of the cross-media product information is achieved by the simplest point-to-point association technology, and the interaction association capacity of the interaction association system is obviously better than that of the existing QR code and other association technology solutions on the market.

The invention has the particular contribution that the association data can be transmitted by taking various approaches, so that the invention solves the technical problem of information congestion in the mobile informatization development effectively, and assists in improving the existing traffic light facility by using the existing social resources of advertisement boards in bus shelters, and visually impaired people obtain help of voice guide and relevant traffic information service via the communication terminal product (such as a smart phone) supporting the interaction association system.

### [Brief Description of the Drawings]

Figure 1A is an operation diagram of a communication terminal product to obtain single association data;
Figure 1 B is a principle diagram of a communication terminal product to obtain single association data;
Figure 1C is an operation diagram of a communication terminal product to obtain multiple association data;
Figure 1 D is a principle diagram of a communication terminal product to obtain multiple association data;
Figure 2A is a principle diagram of a multimedia information signal supporting an interaction association system;
Figure 2B is a schematic diagram of a technical application of an interaction association system;
Figure 3A is a schematic diagram of an interaction association method of a traditional communication terminal product;
Figure 3B is a schematic diagram of an interaction association method of a traditional communication terminal product adopting a two-dimensional code technical scheme;
Figure 3C is a design sketch of a traditional communication terminal product adopting a Q card technology;
Figure 3D is a design sketch of a communication terminal product supporting an interaction association system;
Figure 4A is a design sketch of a traditional electronic advertisement board with an implanted two-dimensional code technology; and
Figure 4B is an application effect diagram of an electronic advertisement board supporting an interaction association system.

### [Detailed Description of Preferred Embodiment]

The following embodiments explain and describe the invention, and do not constitute any limit to the invention;

The invention provides a communication terminal product which compatible with the Interactive Interconnected Systems. The communication terminal product 38 both are compatible with a mobile communication technology system and transmit-receive of a multimedia information signal 01 of the Interactive Interconnected Systems, wherein

The Interactive Interconnected Systems is a composite of an electronic reading device 02 and an electronic transmitter-receiver 03.

The multimedia information signal 01 is compatible with a combination of various media data.

The association data is set to be URI (Uniform Resource Identifier);

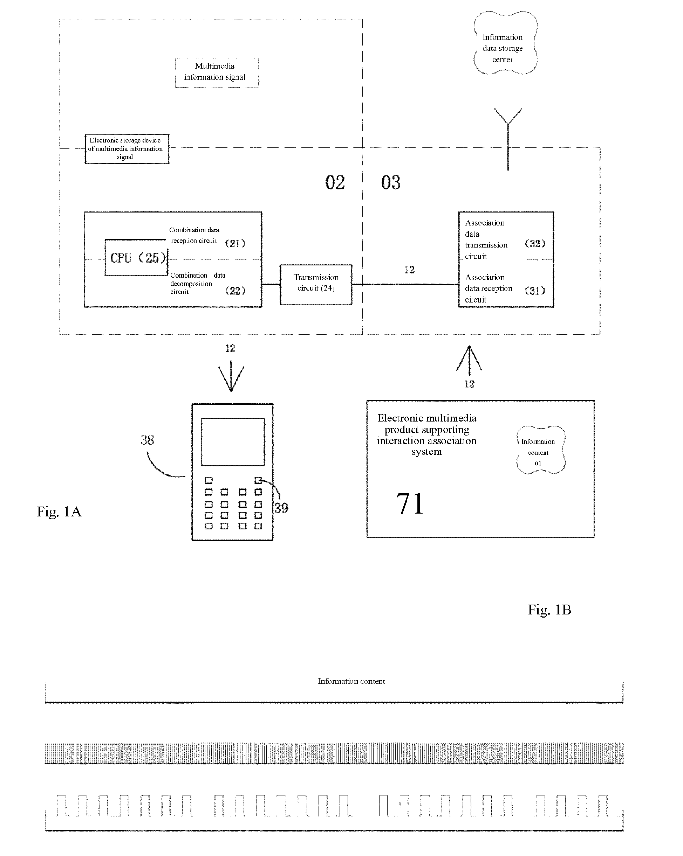

As shown in Figure 1A,

The electronic reading device contains a combination data reception circuit 21, a combination data decomposition circuit 22 and a transmission circuit 24.

The combination data reception circuit is configured to receive the multimedia information signal.

Data decomposition circuit 22 breaks down the multimedia information signal into multimedia information signal and the associated data.

The decomposed associated data is transmitted to the electronic transmitter-receiver via the transmission circuit 24.

The electronic transmitter-receiver contains an associated data reception circuit 31, an associated data transmission circuit 32 and central processing unit (with memory).

The associated data reception circuit 31 is equipped with a short-distance signal transmission-reception circuit;

The short-distance communication technology includes an infrared ray technology and Bluetooth technology, etc.

The electronic transmitter-receiver is used to control transmit-receive of the associated data from the decomposition multimedia information signal. It receives the associated data decomposed by the transmission circuit of the electronic reading device, and then transmits the associated data to an external data storage via remote communication technology. This can obtain the associated digital resource in a quick and efficiency way.

The remote communication technology includes GSM (Global System for Mobile), CDMA (Code Division Multiple Access), GPRS (General Packet Radio Service) and other technologies.

The external data storage can be any storage technology, including resource on internet, cloud storage, or a built-in storage of the electronic reading device, etc.

The called digital resource can be displayed on any product with screen that are compatible with interactive interconnected technology, including electronic terminal product, communication terminal product and computer, etc.

As shown in Figure 1 B,

There is one information content as shown in the figure, one associated data (i.e. URI (Uniform Resource Identifier) is required to be set for the information content. The associated data transmits repeatedly within a readable period.

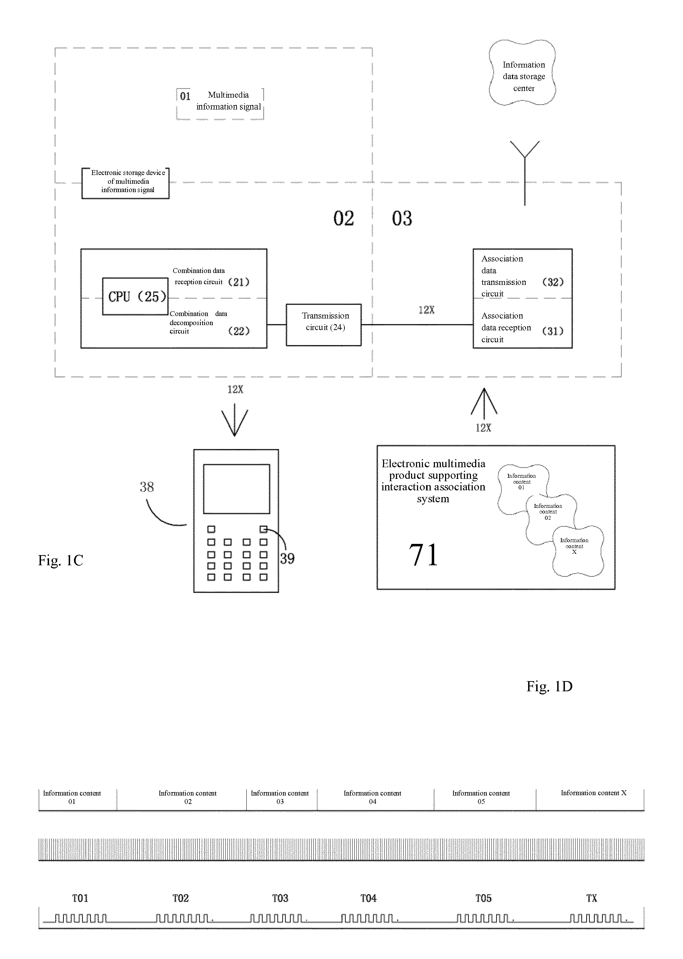

As shown in Figure 1C,

The associated data is an associated data group 12X as a combination of more than one associated data. Different associated data is set to be different URIs (Uniform Resource Identifiers).

As shown in Figure 1 D,
6 information contents are shown, and they are representing 6 associated data (i.e. the six URIs (Uniform Resource Identifiers)), and the different URIs (Uniform Resource Identifiers) are associated with different digital resources...

The URI (Uniform Resource Identifier) T01 represents to the information content 01...

The URI (Uniform Resource Identifier) T05 represents to the information content 05...

The URI (Uniform Resource Identifier) TX represents to the information content X...

The 6 different associated data transmit repeatedly within a readable period.

The associated data is PTP code 14, different PTP code represents different associated data, and different associated data represents different URIs (Uniform Resource Identifiers).

The application of the existing technical solution on the market is as follows.

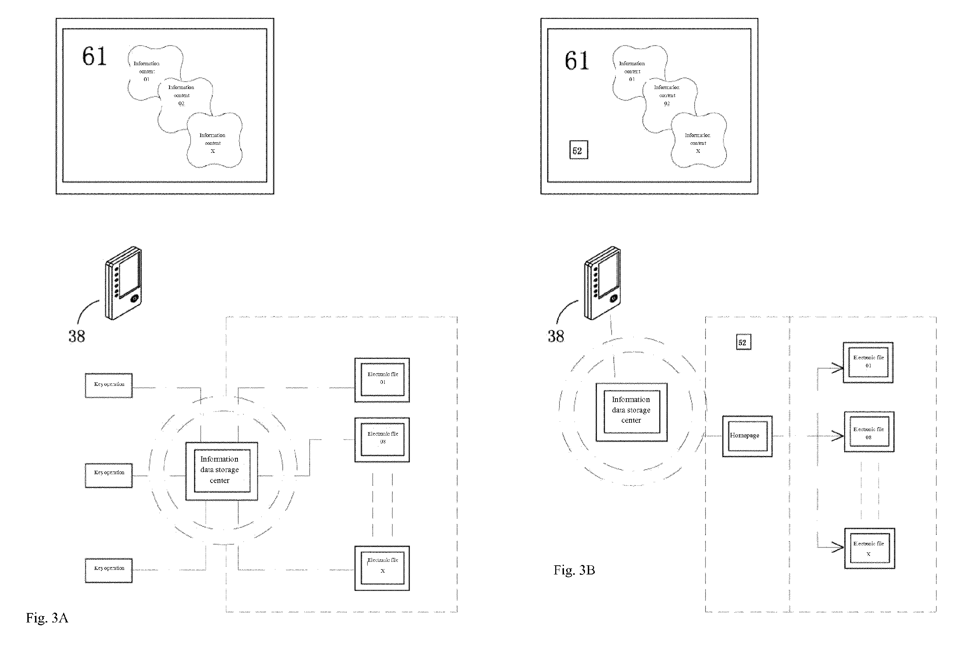

As shown in Figure 3A,

The electronic multimedia product 71 is a multimedia content. Smartphone obtains relevant multimedia content data by download currently.

For example, the relevant electronic product is a multimedia program which includes various contents.

Smartphone user may want to access the relevant content(or service center), detailed searching, obtain more details by phone call, display relative website of the multimedia program, phone number, or a QR code in an instant time
1. Most audiences are too late to mark down.
2. The visually impaired people is difficult to carry out relevant operations very.

In order to improve the impact of traditional media, there are various solutions on the market. One of the solutions is a QR code as shown in the following.

As shown in Figure 3B,

The electronic multimedia product 71 is a multimedia program which contains various contents. In order to allow the audiences to see advertisement contents conveniently, a QR code is embedded in the display content.
1. Smartphone captures the QR code and convert it into URI (Uniform Resource Identifier)...
2. Access to the website of the URI (Uniform Resource Identifier)
3. The traditional webpage search operation is carried out...

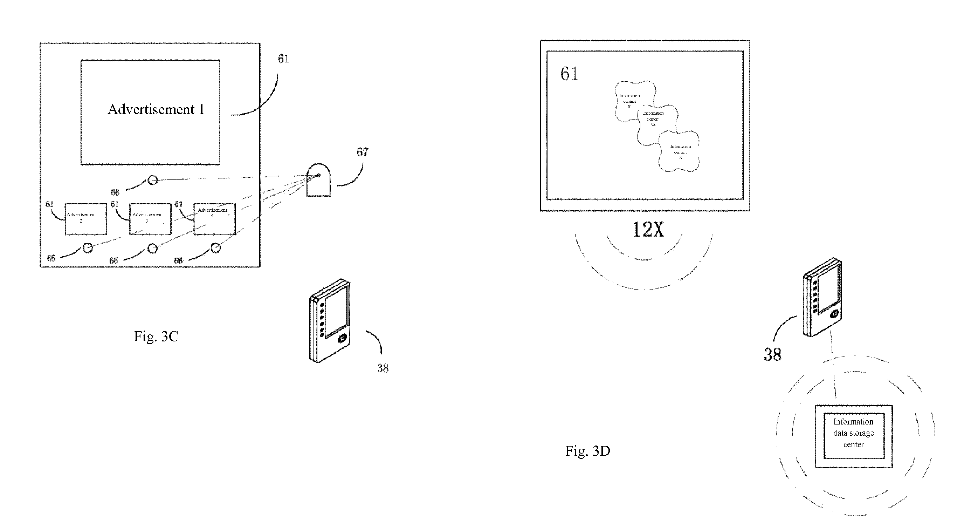

As shown in Figure 3C,

A media company use an interaction screen solution with RFID (Radio Frequency Identification) technology. Compare with the traditional advertisement display screen, three small interaction screens are added on the bottom of the display screen, which act as a media of interaction.

The operation method: Q card is the key to use the platform. User is required to apply for a Q card (RFID card). User follows the instruction from SMS to activate the Q card. Q card interacts with the interaction screens by placing Q card near the interaction screens, the promotion message of the advertisement will send to user via SMS.

Compare with the traditional advertisement display screen, three small interaction screens are added on the bottom of the display screen, which act as a media of interaction. It encounters a lot of problems in practical operation.

For example, the user shall bring the Q card and join a Q card mobile phone plan. It is impossible to allow user to use the platform in a minute.

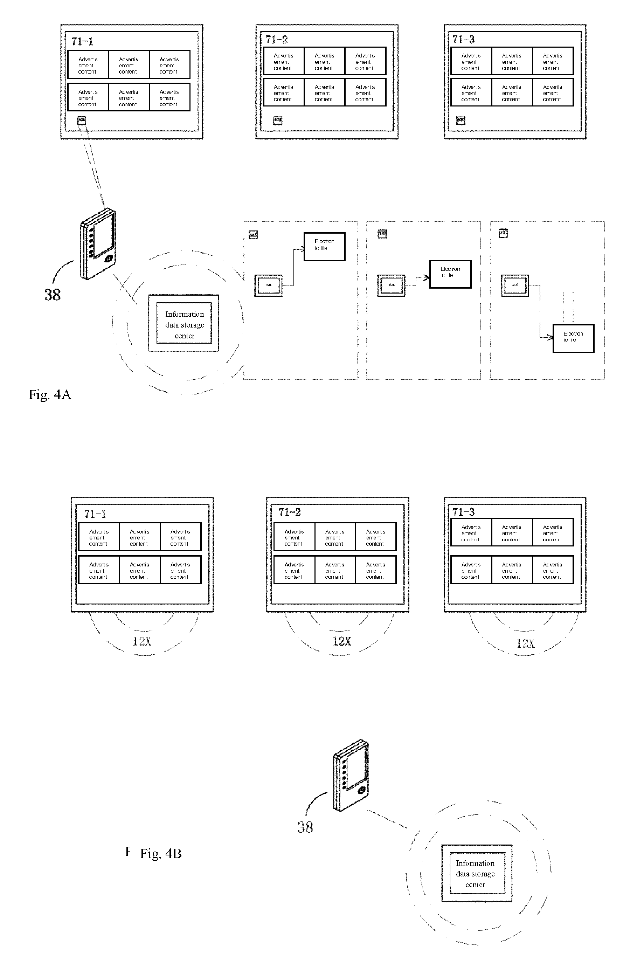

As shown in Figure 4A,

The QR codes have been implanted into three LED (Light Emitting Diode) boards in station to allow passengers to see the advertisement contents.
1. Smartphone captures the QR code and convert it into URI (Uniform Resource Identifier)...
2. Access to the website of the URI (Uniform Resource Identifier)
3. Do the step repeatedly for different QR codes...

It shall be especially emphasized that the operation will be very complicated if the URIs of the 3 QR codes are not come form the same website.

It is hard to capture the QR code in a short time too.

The relevant embodiments of the invention are as follows.

### First mode:

The electronic reading device is a print media product which is embedded into of the Interactive Interconnected Systems. It combined by a data reception circuit, a combination data decomposition circuit, a transmission circuit, a CPU (Central Processing Unit) module board

The electronic transmitter-receiver is a communication terminal product is embedded into of the Interactive Interconnected Systems. It combined by an associated data reception circuit, an associated data transmission circuit and a central processing unit (with memory).

Interactive Interconnected Systems does not change the function of the original product. Interactive Interconnected Systems and the product assist each other when the product integrate with Interactive Interconnected Systems, and the effect is obvious. A barrier-free information connection of cross-media product can be achieved by this simplest point-to-point association technology.

There are two operating methods for obtaining the associated data basically:
First method: On the smart phone (within an effective range), the association operation key 39 is pressed (to start the Interactive Interconnected Systems), and then the operation key 39 is pressed again. The electronic transmitter-receiver can obtain the selected associated data (i.e. the URI (Uniform Resource Identifier)) from the electronic reading device;
Second method: On the smart phone (within an effective range), the association operation key 39 is pressed (to start the Interactive Interconnected Systems), and then input the assigned digit (the PTP code) of the information content (a planar identification mark). The electronic transmitter-receiver can obtain the selected associated data (i.e. the URI (Uniform Resource Identifier)) from the electronic reading device...

Another method is as follows: the user presses an enter key after accomplishing relevant steps of the first method or the second method, and the electronic transmitter-receiver can obtain the selected associated data from the electronic reading device for storage.

Afterwards, the associated digital resource can be obtained anytime. The associated data can be transmitted to the data storage center via the transmission circuit and obtain the associated digital resource for viewing (or listening) on the smartphone.

### Second mode:

The electronic reading device is a print media product which is embedded into of the Interactive Interconnected Systems. It combined by a data reception circuit, the combination data decomposition circuit, the transmission circuit and the CPU module of the electronic reading device, as well as the associated data reception circuit, the associated data transmission circuit and the central processing unit module (with memory) of the electronic transmitter-receiver.

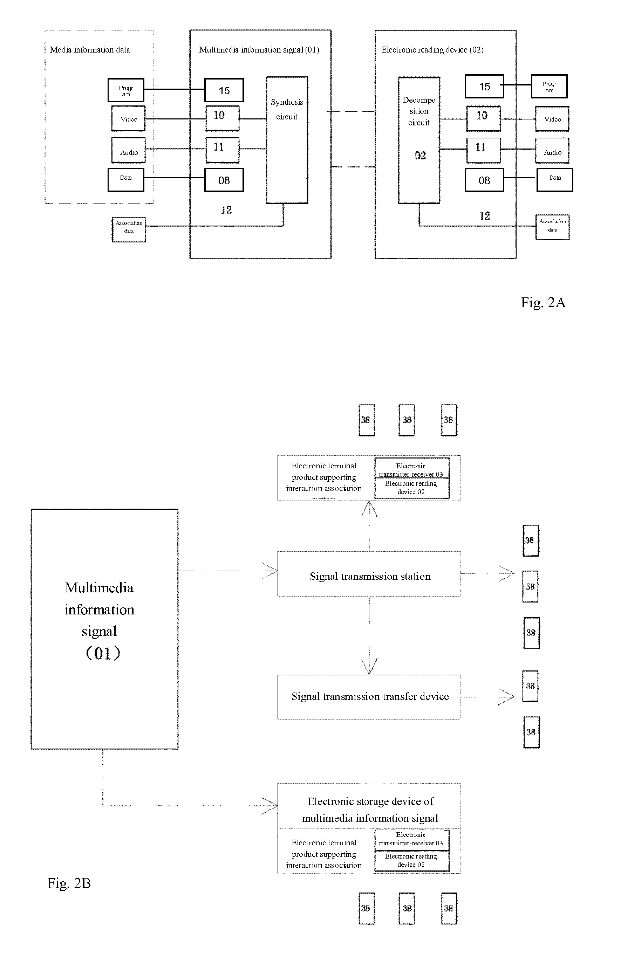

As shown in Figures 1A, 1C and 2B,

The user receives the associated data from the print media product supporting the Interactive Interconnected Systems via the communication terminal product (such as the smart phone) under the guidance (sound and lighting guidance) of the media information content of the print media product and then transmits the associated data synchronously to achieve a point-to-point effect.

It shall be especially emphasized that the mode can provide more conveniences for the visually impaired people and hearing impaired people to use public facilities.
the transmission circuit of the electronic reading device is equipped with the short-distance signal transmission-reception circuit;
the combination data decomposition circuit of the electronic reading device is configured to decompose the multimedia information signal into the media information data that includes digital data 08, video data 10, audio data 11, program data 15, etc.

The media information is decomposed into digital data. The digital data will be transmitted to a digital data system for processing. And then the digital data will be transmitted to related device for use.

The media information is decomposed into video data. The video data will be transmitted to a digital data system for processing. And then the video data will be transmitted to related device for use.

The media information is decomposed into audio data. The audio data will be transmitted to a digital data system for processing. And then the audio data will be transmitted to related device for use.

The media information is decomposed into program data. The program data will be transmitted to a digital data system for processing. And then the program data will be transmitted to related device for use.

The decomposed associated data is transmitted by the transmission circuit and the equipped short-distance signal transmission-reception circuit.

The electronic transmitter-receiver contains the association operation key 39, a signal induction device 36 which support the Interactive Interconnected Systems, and an electronic display screen.

The associated data transmits repeatedly within a readable period of the media information data. The user presses the association operation key 39, and the electronic transmitter-receiver receives the associated data decomposed by the transmission circuit of the electronic reading device, and then transmits the associated data to external data storage via remote communication technology. Then it call out the associated digital resource from the information data storage center.

Since there are many information signals exist in an atmosphere. The communication end product which integrated with the Interactive Interconnected Systems contains the signal induction device 36 (including lighting, sound and the like). It reminds the user that the relevant associated data of the Interactive Interconnected Systems can be provided the effective range where the user is located...which particularly meets the requirements of the visually impaired people.

The association address data can be a hybrid data 12M which mixed with content data such as characters, images, audio and video. The association hybrid data 12M is decomposed into the associated data by an association hybrid data decomposition circuit. User can view the relevant characters, images, audio and video displayed on an electronic display screen according to their need.

### Embodiment 1

As shown in Figure 3D, the communication end product 38 integrated with the invention, the associated data can be obtained easily by the first or second method...

Obviously, the visually impaired people can carry out operations and use.

### Embodiment 2

Another important value of the invention is to support the development of the information accessibility and utilize the existing advertisement board resources of the bus shelters in society.
1. Braille characters and Braille icons are attached to the print Ads boards of the station for guidance.
2. With Interactive Interconnected Systems on the print Ads boards of the station allow the visually impaired people to obtain the relevant traffic information and service from the smart phone.

As shown in Figure 4B, the three LED boards of the station integrated with the invention. The PTP code is added into advertisement contents of the LED boards, and the LED boards broadcast the relevant associated data (simple voice message) which support the Interactive Interconnected Systems. As a result, the visually impaired people are able to use.

### Embodiment 3

The blind is the weakest group in disabled. In order to allow the blind to participate in the social life equally, it is required to raise the education level of them. Although we cannot give a pair of eyes for the blind to see the outside world, our love can allow the blind to feel the light of life at heart.

A special broadcasting program for the visually impaired people can be added in a multimedia program. An audio content of the broadcasting program is to introduce various products that meet the requirements of the visually impaired people. If the visually impaired people need (or are interested) when listening to broadcasting, the visually impaired people start the association operation key via the smart phone supporting the Interactive Interconnected Systems (i.e. the first method of the invention)...

The visually impaired people can obtain (listen to) more relevant information contents of the products via the digital resources set by the associated data... or conduct a subscription procedure.

As shown in Figure 2B,

The multimedia information signal is transmitted via a signal transmission station and a signal transition device.

As shown in Figure 2A,

The multimedia information signal (from various transmission channel) is stored in an electronic storage device, and read by a multimedia terminal product which support the Interactive Interconnected Systems.

The electronic storage device includes an electronic data memory, a compact disc, etc.

When the invention is compared with the operation of obtaining the association data via the two-dimensional code patterns;
1. The Interactive Interconnected Systems shall be embedded into the smart phone for support, which is the same as the QR codes.
2. Obtaining the associated data is much more sensitive and accurate than capturing of the QR codes.
3. The associated data can be obtained without influence of light conditions.
4. The distance for obtaining the associated data can be set the range of tens of meters if required, and the invention is very stable, while the QR code technical scheme has an operation-able range of about 1 m under the normal condition.
5. Use digit instead of the QR codes can reduce the influence on the appearance attractiveness of the advertisement boards.

From the above relevant embodiments, base on the comparison between the invention and the relevant solutions and product on the market. The invention is obviously superior to the others in use, operation, manufacturing cost and transmission effect. The development of the invention will affect every parts of a commercial chain, and create a brand-new commercial mode and value chain.

The invention is revealed through the above embodiments, the usage of the invention is not limited to those. The above elements may be replaced by similar or identical elements realized by those technical under the condition of not deviating from the concept of the invention.

## Claims

1. The invention provides a communication terminal product which supports the Interactive Interconnected Systems. The communication terminal product 38 both supports a mobile communication technology system and transmit-receive of a multimedia information signal 01 of the Interactive Interconnected Systems has the followings features:
The Interactive Interconnected Systems includes an electronic reading device (02) and an electronic transmitter-receiver (03);
The multimedia information signal (01) supports combination of various media data;
The association data is set URI (Uniform Resource Identifier);
The electronic reading device contains a combination data reception circuit (21), a combination data decomposition circuit (22) and a transmission circuit (24).
The combination data reception circuit is configured to receive the multimedia information signal.
Data decomposition circuit (22) breaks down the multimedia information signal into multimedia information signal and the associated data.
The decomposed associated data is transmitted to the electronic transmitter-receiver via the transmission circuit (24).
The electronic transmitter-receiver contains an associated data reception circuit (31), an associated data transmission circuit (32) and central processing unit (with memory).
The associated data reception circuit (31) is equipped with a short-distance signal transmission-reception circuit.
The electronic transmitter-receiver is used to control the transceiver of the associated data from the decomposition multimedia information signal. It receives the associated data decomposed by the transmission circuit of the electronic reading device, and then transmit the associated data to external data storage via remote communication technology. This can obtain the associated digital resource in a quick and efficiency way.

2. The feature of communication terminal product which is compatible with the Interactive Interconnected Systems of claim 1:
The electronic transmitter-receiver includes an associated data reception circuit, an associated data transmission circuit and a central processing unit module (with memory). The electronic reading device includes combination data reception circuit, the combination data decomposition circuit, the transmission circuit and a CPU (Central Processing Unit) module which all are embedded in the communication terminal product in standalone operation mode.

3. The feature of communication terminal product which compatible with the Interactive Interconnected Systems of claim 1:
The electronic transmitter-receiver includes an associated data reception circuit, an associated data transmission circuit and a central processing unit module (with memory) which all are embedded in the communication terminal product in standalone operation mode.
The electronic reading device includes an combination data reception circuit, an combination data decomposition circuit, an transmission circuit, and a CPU module which all are embedded in the electronic terminal product that compatible with the interaction association system.

4. The feature of communication terminal product which is compatible with Interactive Interconnected Systems of claim 2 or 3:
The transmission circuit of the electronic reading device is equipped with the short-distance signal transmission-reception circuit.
the combination data decomposition circuit of the electronic reading device is configured to decompose the multimedia information signal into the media information data that includes digital data (08), video data (10), audio data (11), program data (15), etc.
The media information is decomposed into digital data. The digital data will be transmitted to a digital data system for processing. And then the digital data will be transmitted to related device for use.
The media information is decomposed into video data. The video data will be transmitted to a digital data system for processing. And then the video data will be transmitted to related device for use.
The media information is decomposed into audio data. The audio data will be transmitted to a digital data system for processing. And then the audio data will be transmitted to related device for use.
The media information is decomposed into program data. The program data will be transmitted to a digital data system for processing. And then the program data will be transmitted to related device for use.
the decomposed associated data is transmitted by the transmission circuit and the equipped short-distance signal transmission-reception circuit.

5. The feature of communication terminal product which compatible with Interactive Interconnected Systems of claim 2 or 3:
The electronic transmitter-receiver is used to receive the associated data decomposed by the transmission circuit (24) of the electronic reading device, and then transmit the associated data to external data storage via remote communication technology. This can obtain the associated digital resource in a quick and efficiency way.

6. The feature of communication terminal product which compatible with Interactive Interconnected Systems of claim 1:
The electronic transmitter-receiver includes an association operation key (39) which is compatible with Interactive Interconnected Systems.

7. The feature of communication terminal product which is compatible with Interactive Interconnected Systems of claim 1:
The electronic transmitter-receiver includes a signal induction system (36) and an association operation key (39) which is compatible with Interactive Interconnected Systems.

8. The feature of communication terminal product which compatible with Interactive Interconnected Systems of claim 1:
The electronic transmitter-receiver includes an association operation key (39) which is compatible with Interactive Interconnected Systems, a signal induction device (36) which is compatible with Interactive Interconnected Systems, and an electronic display screen.

9. The feature of communication terminal product which is compatible with Interactive Interconnected Systems of claim 1:
The multimedia information signal is transmitted via a signal transmission station and a signal transmission transfer device.

10. The feature of communication terminal product which is compatible with Interactive Interconnected Systems of claim 1:
The multimedia information signal (from various transmission channel) is stored in an electronic storage device, and read by a multimedia terminal product which is compatible with the Interactive Interconnected Systems.
